# EUROPEAN PATENT SPECIFICATION

(11) **EP 4 284 600 B1**
(45) Date of publication and mention of the grant of the patent: **02.12.2026**
(21) Application number: 21703010.5
(22) Date of filing: 01.02.2021
(51) Int. Cl.: B25J 9/16, B25J 19/06, G02B 27/01

(54) **ROBOT CONTROLLER AND OPERATOR INTERFACE FOR VISUALIZATION OF A ROBOT MOTION PATH AND ITS USE IN ROBOT PATH PLANNING**
ROBOTERSTEUERUNG UND BEDIENERSCHNITTSTELLE ZUR VISUALISIERUNG EINES ROBOTERBEWEGUNGSWEGES UND DEREN VERWENDUNG BEI DER ROBOTERWEGPLANUNG
CONTRÔLEUR DE ROBOT ET INTERFACE D'OPÉRATEUR POUR LA VISUALISATION D'UN TRAJET DE MOUVEMENT DE ROBOT ET SON UTILISATION DANS LA PLANIFICATION DE TRAJET DE ROBOT

(43) Date of publication of application: 06.12.2023
(73) Proprietor: ABB Robotics Schweiz AG, 8050 Zürich (CH)
(72) Inventor: SPAMPINATO, Giacomo, 725 97 Västerås (SE); NORRLÖF, Mikael, 602 12 Norrköping (SE); BJÖRKMAN, Mattias, 722 46 Västerås (SE); WAHRBURG, Arne, 64331 Weiterstadt (DE); ENAYATI, Nima, 68169 Mannheim (DE); CLEVER, Debora, 64673 Zwingenberg (DE)
(74) Representative: Kransell & Wennborg KB
(86) International application number: PCT/EP2021/052312
(87) International publication number: WO 2022/161637

(56) References cited:
- DE-B3- 102018 109 463
- US-A1- 2019 105 779
- ABHINAV JAIN ET AL: "Anticipatory Human-Robot Collaboration via Multi-Objective Trajectory Optimization", ARXIV.ORG, CORNELL UNIVERSITY LIBRARY, 201 OLIN LIBRARY CORNELL UNIVERSITY ITHACA, NY 14853, 31 July 2020 (2020-07-31), XP081726143
- JAIN ASHESH ET AL: "PlanIt: A crowdsourcing approach for learning to plan paths from large scale preference feedback", 2015 IEEE INTERNATIONAL CONFERENCE ON ROBOTICS AND AUTOMATION (ICRA), IEEE, 26 May 2015 (2015-05-26), pages 877 - 884, XP033168511, DOI: 10.1109/ICRA.2015.7139281

## Description

### TECHNICAL FIELD

The present disclosure relates to the field of human-machine interaction and human-robot interaction in particular. The disclosure proposes a system and method for indicating potential motion paths of a robot manipulator to an operator, who is thereby enabled to engage in the robot path planning.

### BACKGROUND

The conventional way of programming industrial robots, by scripting detailed sequences of move instructions, is not always an effective strategy when applied to difficult planning tasks. Path planning (or motion planning) by trajectory optimization appears nowadays to be a more promising technique for approaching such complex scenarios, both in its offline and online variants. In trajectory optimization, the operator (with the assistance, possibly, of a programmer or integrator) formulates an optimization problem in which a set of initial and final conditions is specified, as is a set of constraints that the robot must fulfill during its motion. The constraints and conditions typically correspond to a task to be completed by the robot and the spatial and mechanical limits under which it operates. The operator further specifies an objective function that the solver tries to optimize while meeting the initial and final conditions and the constraints, so as to find an optimal and acceptable trajectory that the robot can execute. This process normally constitutes an optimal path planning strategy, which may however be fairly impenetrable from the perspective of the operator, who cannot predict the resulting optimal path until execution begins.

Although trajectory optimization means that the robot is going to move optimally when it fulfils the underlying task, the evident potential drawback of this approach is that the operator, not being aware of the robot path, might accidentally obstruct the robot motion with a tool or workpiece or with his or her own body. This drawback is worth considering especially in use cases involving close human-machine collaboration. The safety aspect is generally guaranteed by the robot supervision, but the optimality of the motion path might be ruined by the avoidance maneuver that the obstruction triggers. From a behavioral perspective, the user acceptance of certain close collaborative applications might also be compromised.

DE 102018109463 B1 discloses a method in which a virtual representation of a robot manipulator is used to show future poses of the robot manipulator to a user. A planned robot trajectory can be illustrated by letting the virtual representation follow the trajectory. The document refers to two trajectories that are sections of an overall motion path and not two alternative paths. The user is allowed to select objects (workpieces) while seeing the virtual representation, and a corresponding two-section trajectory is generated. The document present embodiments where an "alternative trajectory" is generated in reaction to finding that a first trajectory collides with an obstacle. The alternative trajectory is not generated until the first one has been rejected on objective grounds.

US 2019105779 A1 discloses a robotic system for simultaneous user-performed operation and robot operation in a collaborative workspace. The robotic system plans and/or adjusts robotic motions based on an expectation about how the user will move his body members. For this purpose, there are defined on successive hierarchic levels a task prediction envelope, a kinematic envelope and a proximity envelope.

Reference 1 discloses a trajectory optimization framework that utilizes stochastic motion prediction to anticipate a human's motion and adapt a robot's joint trajectory accordingly. A multi-objective cost function is designed that simultaneously optimizes for separation distance, visibility of an end-effector, legibility, efficiency and smoothness.

Reference 2 discloses to represent trajectory preferences using a cost function that a robot learns and to use it to generate trajectories in new environments.
Reference 1: ABHINAV JAIN ET AL: "Anticipatory Human-Robot Collaboration via Multi-Objective Trajectory Optimization", ARXIV.ORG, CORNELL UNIVERSITY LIBRARY, 201 OLIN LIBRARY CORNELL UNIVERSITY ITHACA, NY 14853, 31 July 2020 (2020-07-31), XP081726143
Reference 2: JAIN ASHESH ET AL: "Planlt: A crowdsourcing approach for learning to plan paths from large scale preference feedback", 2015 IEEE INTERNATIONAL CONFERENCE ON ROBOTICS AND AUTOMATION (ICRA), IEEE, 26 May 2015 (2015-05-26), pages 877-884, XP033168511, DOI: 10.1109/ICRA.2015.7139281

### SUMMARY

One objective of the present disclosure is to make automated robot path planning with a high user acceptability available. A further objective is to allow an operator to interact meaningfully with an industrial robot to improve its path planning. It is envisioned that such methods and devices may offer the operator a selection of potential motion paths, among which the operator can make a conscious or unconscious choice. A still further objective is to provide an operator interface which facilitates responsive robot path planning.

These and other objectives are achieved by the invention defined by the independent claims. The dependent claims relate to advantageous embodiments.

In a first aspect of the invention, there is provided a method for responsive robot path planning and a robot controller configured for responsive robot path planning according to claims 1 and 14, respectively.

A robot controller which is aware of the operator's behavior while the visualization reveals the potential motion paths - sensors in the operator interface may report this behavior - is able to make a well-informed selection of a motion path, i.e., a path to be treated in the subsequent stages of the path planning and path execution as a preferred one. In optimization-based path planning approaches, the operator's behavior may be regarded as a preferability factor in addition to the objective function.

The operator behavior may be an express selection of one path. This may increase the operator's degree of involvement and enjoyment in his or her workplace. It may also favor the user acceptance of human-robot collaborative work in general.

Alternatively, the operator participating in the method of the first aspect may be instructed to behave naturally and professionally, simply carrying out his or her tasks in the most rational manner. Forthright obstruction is but one of the many ways in which the operator's behavior may promote or degrade the suitability of a potential motion path; indeed, the non-obstructed potential paths may be encumbered by invisible factors such as energy consumption, local acceleration and excessive vibration. For this reason, the operator may oftentimes be unaware of which one of the potential motion paths his behavior is rendering preferred. Therefore, the operator may need little or no preliminary training to contribute meaningfully to the robot's path planning by participating in the method within the first aspect.

As yet another alternative, the operator's reaction to the potential motion path may be to input a new motion constraint, such as a defined area which the robot manipulator is not allowed to enter. The robot controller is to observe the new motion constraint when it performs the continued path planning.

In a second aspect of the invention, there is provided a method and an operator interface for facilitating responsive robot path planning according to claims 6 and 15, respectively.

As explained just above, knowledge of the operator's behavior while the visualization reveals the potential motion paths is a valuable asset in the path planning to be performed by the robot controller. From the point of view of the operator, an interface configured in accordance with the second aspect may promote a better appreciation of the robot manipulator's presence in the shared workspace and an ability to interact more seamlessly. The operator may for instance consciously choose not to interfere with the robot's planned movement and thereby avoid triggering a time-consuming replan operation. Conversely, the operator's behavior - especially if repeated consistently over time - may shape (personalize) the robot's motion pattern into one which leaves the operator room to sit or stand more comfortably or ergonomically.

The invention further relates to a computer program containing instructions for causing a computer, or the robot controller or operator interface in particular, to carry out the above methods. The computer program may be stored or distributed on a data carrier. As used herein, a "data carrier" may be a transitory data carrier, such as modulated electromagnetic or optical waves, or a non-transitory data carrier. Non-transitory data carriers include volatile and nonvolatile memories, such as permanent and non-permanent storage media of magnetic, optical or solid-state type. Still within the scope of "data carrier", such memories may be fixedly mounted or portable.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, on which:
figure 1 is a perspective view of a collaborative industrial robot, which shares a workspace Ω with an operator;
figures 2 and 3 are flowcharts of methods according to embodiments of the present invention;
figure 4 is a sequence diagram illustrating communication between an operator interface, robot controller and robot manipulator;
figure 5 illustrates a motion path *X*₁ of a robot manipulator and a corresponding occupancy area *A*₁;
figure 6 illustrates a workspace Ω including a physical space *A*₁₉₀ occupied by the operator, motion paths *X*₁*, X*₂ and a motion constraint Ω₀;
figure 7 is an augmented reality (AR) representation of a robot manipulator which includes a superimposed virtual silhouette indicating a non-visual characteristic of the robot manipulator; and
figure 8 shows a wearable operator interface.

### DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

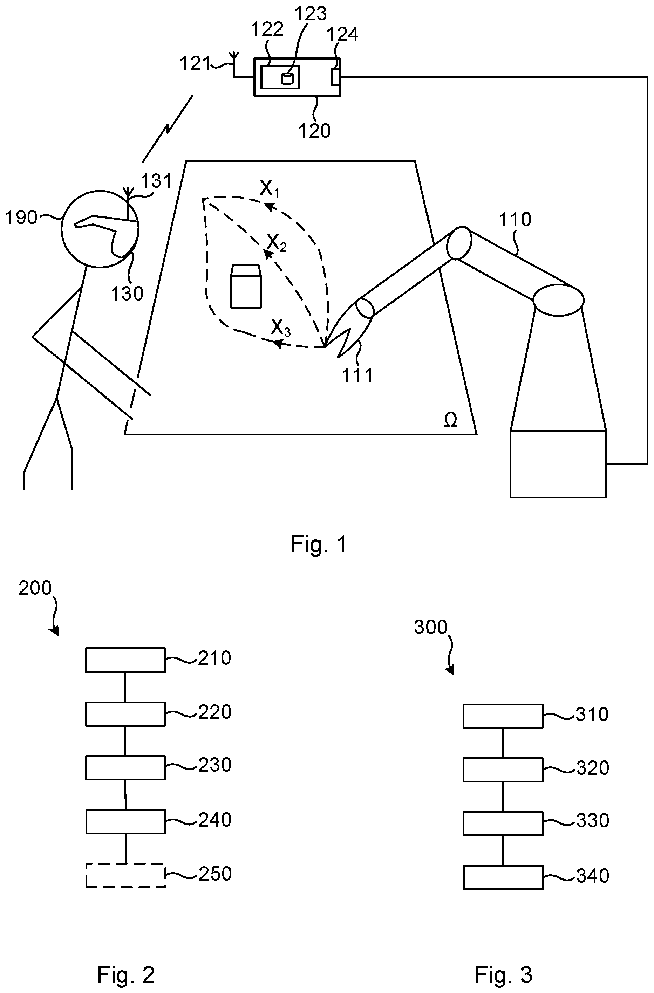

A shared workspace Ω is exemplified in figure 1 as a work surface, such as an assembly table or factory conveyor. In other embodiments, the workspace Ω may be three-dimensional in the sense that it comprises elevated portions, such as shelves, containers, tool racks and feeders for supplies. The workspace Ω is shared between a human operator 190 and an industrial robot, wherein the latter generally consists of a robot manipulator 110 under the control and supervision of a robot controller 120. The workspace Ω occasionally holds tools and workpieces, e.g., raw materials, semi-finished and finished products, as suggested by the box located between paths *X*₂ and *X*₃. The industrial robot may be a collaborative robot configured to participate in a utility task together with the operator 190.

The operator 190 is associated with an operator interface 130 by wearing or carrying the operator interface 130. In the depicted embodiment, the operator interface 130 is implemented as glasses - also referred to as smart glasses, augmented-reality (AR) glasses, virtual-reality (VR) glasses or a head-mounted display (HMD) - which when worn by the operator 190 allows him or her to observe the workspace Ω through the glasses in a natural manner. The operator's view may further include the robot manipulator 110, the operator's hands etc. when such are present. In other embodiments, the operator interface 130 may a helmet-mounted display.

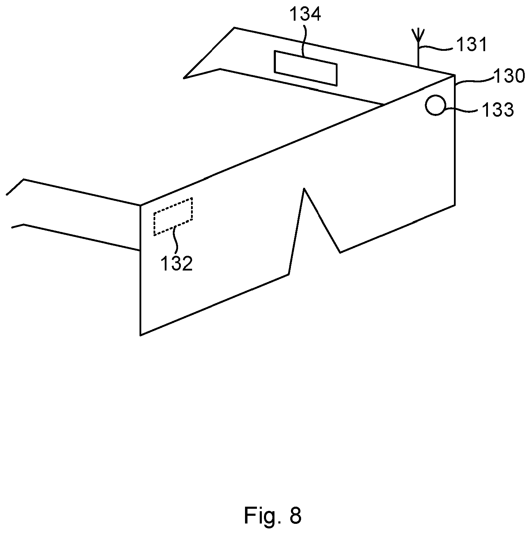

As figure 8 shows in greater detail, the operator interface 130 is further equipped with an arrangement 132 for generating visual stimuli adapted to produce, from the operator's 190 point of view, an appearance of graphic elements overlaid (or superimposed) on top of the view of the workspace Ω. Various ways to generate such stimuli in see-through HMDs are known per se in the art, including diffractive, holographic, reflective and other optical techniques for presenting a digital image to the operator 190. The operator interface 130 further includes one or more sensors 133 configured to sense quantities indicative of the operator's behavior. The sensors 133 may include an imaging device, such as a camera, lidar or ultrasound device, oriented in a viewing direction of the operator 190 and thereby likely to capture the workspace Ω at relevant times. The imaging device may provide imagery showing the positioning of graphical elements visualized by the arrangement 132 (e.g., motion paths) relative to the operator's 190 hands and other body parts. As another example, the sensors 133 may include a gaze-tracking (or eye-tracking) arrangement for indicating a current gaze point or gaze direction of the operator 190. The sensors 133 may include a microphone, a speech interface, a haptic sensor, a head tracker, hand tracker or gesture sensors attached to the operator's 190 garments. Still further, the sensors 133 may include a fixed, handheld or worn button, keypad, pointing device or other input means, which allows the user to enter a direct instruction or an explicit path preference in an easily machine-readable format.

An attractive implementation option may be to utilize an off-the-shelf operator interface 130, such as a commercial product acting as a 3D visualization plugin for the robot controller 120, to visualize the potential motion paths. The off-the-shelf operator interface 130 is deployed in parallel with dedicated sensors 133 arranged to capture the operator behavior. The sensors 133 may be stationary or operator-carried. An example stationary sensor 133 is a camera suspended above the workspace Ω. Thus, an "operator interface" in the sense of the claims may refer, not only to a monolithic device, but equally to an arrangement of disconnected components that receive visualization data from, or transmit sensor data to, the robot controller 120.

The robot controller 120 includes processing circuitry 122 configured for path planning and optional further processing tasks. The processing circuitry 122 may comprise a memory 123 for storing configuration data, software and/or work history data. It may further include a wired or wireless interface 124 for transmitting control signals to actuators in the robot manipulator 110 and receive data from sensors therein.

The robot controller 120 may for instance be configured for path planning using the trajectory optimization approach mentioned initially. Under this approach, the basic functionality of the robot controller 120 is to provide a motion path *X*₁ contained in the workspace Ω. The motion path *X*₁ may be represented in a format that includes necessary executable motion instructions to be fed to the robot manipulator 110. In trajectory optimization, it is expected that such motion path *X*₁ approximately maximizes or minimizes a predefined objective function (cost function) and does so subject to initial and/or final conditions (constraints). The solution may be an approximate solution in the sense of being optimal only within a predefined finite tolerance and/or in the sense that it has been computed in finite time by a numerical solver, e.g., until a predefined convergence criterion was met. The motion path *X*₁ to be executed by the robot manipulator 110 may be expressed with respect to a tool center point (TCP), referring to the arranging of an end effector 111 on the robot manipulator 110. The objective function used in the trajectory optimization may be related to the perceived technical suitability of the path or may express another figure-of-merit, such as path length, maximum acceleration, total execution cost and the like. The inputting and management of the objective functions may be handled using a programming tool, such as the applicant's product RobotStudio^{®}.

The robot controller 120 is configured to provide a plurality of potential motion paths *X*₁*, X*₂*, X*₃, ..., which are functionally equivalent with regard to at least one initial or final condition, and/or a transportation task. To illustrate, figure 1 shows three motion paths *X*₁, *X*₂*, X*₃ with a common start and end point; for the purpose of transporting a workpiece, such motion paths *X*₁, *X*₂*, X*₃, ... are functionally equivalent. The paths *X*₁,*X*₂,*X*₃, ... may correspond to approximate solutions of a family of optimization problems that have a common objective function and/or at least one common optimization constraint. Well-known techniques exist for converting an optimization constraint into a term in the objective function; such a term may be a barrier function or indicator function assigning a penalty to values violating the constraint. There are also ways to translate a component of the objective function into one or more constraints, including linearization techniques and preconditioning techniques. The different paths *X*₁, *X*₂*, X*₃, ... may correspond to the inclusion of - or the assigning of different weights to - different optimization criteria, whether these are expressed in terms of the objective function or the constraints. Such optimization criteria may be selected from at least the following:
- minimal path length,
- minimal peak acceleration,
- minimal duration,
- minimal energy cost,
- minimal energy transfer in case of a collision,
- maximal expected robot lifetime, which may be inversely related to the peak acceleration and the number of peak acceleration events,
- minimal end-effector vibration, e.g., due to gearbox ripple at relatively low speed.

In some embodiments, various concepts, theoretical results and solution techniques from multi-objective optimization (MOO) are applied. MOO theory generally addresses the simultaneous optimization of more than one objective function and related problems. If the objective functions are conflicting and a deadlock has been reached, then the way forward may necessitate automated or operator-assisted tradeoffs. Accordingly, different optimization criteria of the kind reviewed just above may be formulated as a corresponding set of objective functions, which are combined into a common MOO problem. For this problem, the potential motion paths *X*₁, *X*₂*, X*₃, ... may correspond to approximate Pareto-optimal solutions, each having the property that none of the objective functions can be improved (i.e., brought to decrease if the optimization is a minimization problem) without degrading some of the other objective functions. The subjective preference information necessary to advance the MOO from this point is provided by the operator behavior sensed by the operator interface 130. More precisely, the robot controller 120 is configured to select at least one of the approximate Pareto-optimal solutions as the preferred motion path based on the operator behavior; information derived from this preferred motion path may then be used to guide the generating of new Pareto-optimal solutions of the MOO problem (interactive MOO solving).

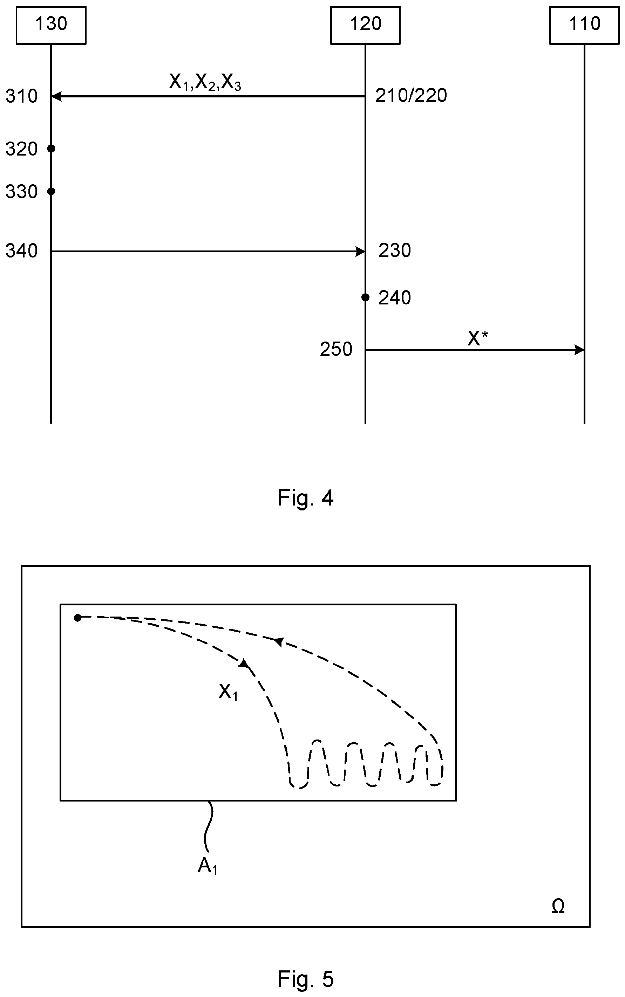

The robot controller 120 and operator interface 130 are equipped with respective wireless interfaces 121, 131, symbolized in figure 1 by antennas. The wireless interfaces 121, 131 may for example be of the cellular, local-area or near-field type, depending on the requirements of the use case. Communications between the robot controller 120 and operator interface 130 may travel in both directions. Figure 4 offers a synoptic view of communications exchanged while the robot controller 120 executes the method 200 illustrated in figure 2 and the operator interface executes the method 300 illustrated in figure 3, and additionally illustrates control signals applied to the robot manipulator 110 by the robot controller 120.

Initially, the robot controller 120 provides a plurality of potential motion paths *X*₁, *X*₂*, X*₃, ... (step 210) and causes the operator interface 130 to visualize these (step 220). In this connection, the potential motion paths *X*₁, *X*₂*, X*₃, ... may be provided by trajectory optimization or one of its specific further developments such as MOO, as discussed above. Alternatively, the potential motion paths *X*₁, *X*₂*, X*₃, ... may be read from the memory 123 or received from a different entity communicating with the robot controller 120. Indeed, a deterministic phase of a work cycle performed by the robot manipulator 110 (e.g., the initial state before any workpieces have been loaded into the workspace Ω) may correspond to a trajectory optimization problem with invariant conditions, so that each solving of the optimization problem will always return an identical set of potential motion paths *X*₁, *X*₂*, X*₃, ...; different runs of the work cycle may differ only with respect to the operator behavior. In these and similar circumstances, it may be advantageous to compute and pre-store these potential motion paths *X*₁, *X*₂*, X*₃, ... in the memory 123.

In said step 220, the robot controller 120 transfers a visualization request including data representing the potential motion paths *X*₁, *X*₂*, X*₃, ... over the wireless interface 121 to the operator interface 130, in which the communication is received and processed (step 310). As a result, the operator interface 130 causes the optical arrangement 132 to generate an AR environment visualizing the potential motion paths *X*₁, *X*₂*, X*₃, ... to the operator 190 (step 320). Reference is made to WO2019173396, which describes a generic path visualization techniques. The operator interface 130 may vary the thickness, color or other properties of a visualized path as a function of momentary speed, kinetic energy, applied power or similar quantities.

The potential motion paths *X*₁, *X*₂*, X*₃, ... may be visualized as two- or three-dimensional curves in the AR environment. Alternatively or additionally, as figure 5 illustrates, the AR environment may include an occupancy area *A*₁ of a potential motion path *X*₁. The occupancy area *A*₁ may be a subset of the workspace Ω enclosed by a bounding box (or minimum bounding box) of the potential motion path *X*₁. The occupancy area *A*₁ may be defined by the points visited by the TCP but may, in some embodiments, additionally include the additional area/space swept by the end effector 111 or a workpiece to be carried by the robot manipulator 110 during the movement. It may be useful to replace or augment the AR visualization of a potential motion path *X*₁ with an occupancy area *A*₁ of this kind in cases where the motion path *X*₁ has a complex shape, such that its total spatial extent is difficult to grasp visually. Another situation where it is advisable to visualize an occupancy area *A*₁ is where the robot manipulator 110 will be carrying an end effector 111 or workpiece that is potentially harmful to the operator 190, who should observe an added safety distance.

The one or more sensors 133 of the operator interface 130 record the user's 190 behavior while the potential motion paths *X*₁, *X*₂*, X*₃, ... are being visualized. The operator behavior may include a selection of one of the visualized potential motion paths *X*₁, *X*₂*, X*₃, ..., wherein the operator's 190 selection may be captured by a speech sensor, camera, gesture, keypad or the like.

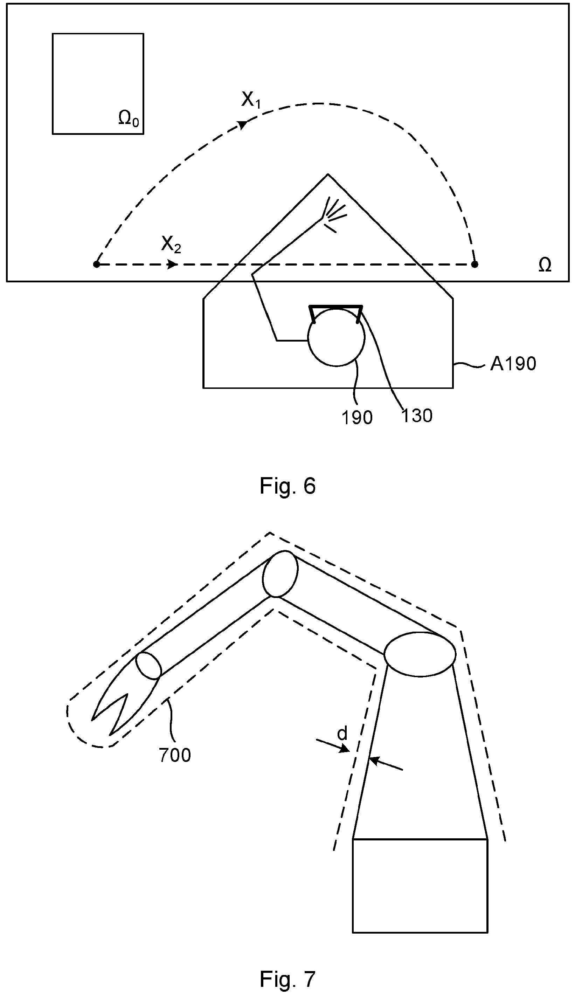

Alternatively or additionally, the operator behavior may include a motion constraint which the operator 190 inputs. The motion constraint may for example include a forbidden area Ωₒ, as illustrated by the top view of the workspace Ω in figure 6. The operator 190 may choose to define such a forbidden area Ωₒ in order to provide a safe place to store tools or other personal necessities temporarily, to cause the robot manipulator 110 to avoid a damaged or otherwise altered area of the workspace Ω pending repair, and the like. This offloads any robot supervision functionalities executing in the robot controller 120, including collision avoidance.

As further illustrated in figure 6, the operator behavior includes a physical space *A*₁₉₀ which is occupied by the operator 190. The operator 190 may actively define this physical space *A*₁₉₀, or it may be automatically defined by the robot controller 120 or operator interface 130 after observing the operator's 190 bodily moves and poses. In the geometry shown in figure 6, the relevant portion of the physical space *A*₁₉₀ corresponds approximately to the area which the operator's left arm may occupy. To avoid collision with the robot manipulator 110, therefore, the upper potential motion path *X*₁ is to be preferred over the lower path *X*₂ although the latter connects the endpoints by a straight line.

The operator interface 130 reports the operator behavior, of any of these types mentioned, via the wireless interface 131 (step 340). When the robot controller 120 receives the data representing the operator behavior (step 230), it goes on to select, based on the physical space occupied by the operator, at least one preferred motion path *X** from the potential motion paths *X*₁, *X*₂*, X*₃, ... (step 240). The selection in step 240 may be a direct reading of the operator's 190 conscious selection. Alternatively, it may involve an analysis of the operator's 190 movements or other comportment to determine which one of the potential motion paths *X*₁, *X*₂*, X*₃, ... is the preferable one. Further still, it may include a rerun of the path-planning operations in step 210 while accounting for a motion constraint Ω₀ added by the operator 190, which operation returns one or more new motion paths ${X}_{1}^{′} , {X}_{2}^{′} , …$. The selection of the at least one preferred motion path *X** may further be supported or performed by a suitably trained machine-learning (ML) model.

If the robot controller 120 assesses that the at least one motion path *X** resulting after step 240 is fit for execution by the robot manipulator 110 without further refinement, it transfers an execution request including data representing said at least one motion path *X** via the interface 124 (step 250). If instead the robot controller 120 determines that the at least one motion path *X** is not yet suitable for execution, it resumes path planning. For example, the at least one motion path *X** may be used as a basis for the continued path planning, like in the interactive MOO solving paradigm mentioned above.

Figure 4 may be understood to depict a sequence of consecutive events, e.g., if the visualization of the potential motion paths *X*₁, *X*₂*, X*₃, ... is carried out in a training mode of the industrial robot whereas the execution of the preferred motion path *X** is deferred to a production mode. Some embodiments however foresee simultaneous or time-overlapping execution of some of the method steps. For example, the robot manipulator 110 may very well start moving along one of the potential motion paths *X*₁ (e.g., a currently preferred path) while the continuation of that path *X*₁ is being visualized together with at least one alternative path *X*₂*,* and the operator's 190 behavior during the ongoing movement may guide the robot controller 120 to either maintain the current path *X*₁ or switch to the alternative path *X*₂ to avoid a collision or other inconvenience. Such quasi-simultaneous performing of multiple steps of the described methods 200, 300 is possible using a state-of-the art operator interface 130 with low latency. It may be particularly advantageous if the robot manipulator 110 performs a repeating work cycle; this allows the robot controller 120 to gradually refine the robot manipulator's 110 motion pattern. The quasi-simultaneous visualization and execution of the motion paths *X*₁, *X*₂*, X*₃, ... may also benefit the perceived realism of the AR environment, since the actual manipulation of raw materials, workpieces etc. is visible along with the paths.

Figure 7 shows an optional feature of the AR environment, which may be used to represent a non-visual characteristic of a robot manipulator 110, which may be a physical quantity such as its mass, load, acceleration, moment of inertia and/or collision energy transferable at transient impact. A virtual silhouette 700 is superimposed on the natural picture of the robot manipulator 110 in the AR environment. The color, pattern or a dimension *d* of the virtual silhouette 700 can be varied to express different values of the non-visual characteristic. The dimension d may for example be a thickness of the silhouette 700, as shown in figure 7. The virtual silhouette 700 may be updated in accordance with the operator's 190 path selection or other behavior - in such manner that the value of the non-visual characteristic (if variable across paths) corresponds to that of the currently preferred motion path. The AR environment may also visualize a virtual movement of the robot manipulator 110, during which the virtual silhouette 700 is updated concurrently to correspond at each point in time to the momentary value of the non-visual characteristic. In this way, the operator 190 may acquire an intuitive feeling for which part of the chosen path is potentially more dangerous or ergonomically uncomfortable for the collaborative work. Accordingly, the displaying of the virtual silhouette 700 with its variable appearance allows the operator 190 to make a better-informed risk assessment.

The aspects of the present disclosure have mainly been described above with reference to a few embodiments. However, as is readily appreciated by a person skilled in the art, other embodiments than the ones disclosed above are possible within the scope of the invention, as defined by the appended patent claims.

## Claims

1. A method (200) of responsive robot path planning, the method being implemented in a robot controller (120) and comprising:
providing (210) a plurality of potential motion paths (*X*₁, *X*₂*, X*₃, ...) of a robot manipulator (110) controlled by the robot controller;
causing (220) an operator interface (130) to visualize the potential motion paths together at the same time, wherein the operator interface is associated with an operator (190) who shares a workspace (Ω) with the robot manipulator and who wears or carries the operator interface;
obtaining (230) operator behavior during the visualization, wherein the operator behavior includes a physical space (*A*₁₉₀) occupied by the operator during the visualization; and
selecting (240), from the potential motion paths and on the basis of the physical space occupied by the operator, at least one preferred motion path,
wherein the potential motion paths are functionally equivalent with regard to at least one initial or final condition and/or a transportation task.

2. The method (200) of claim 1, wherein the potential motion paths (*X*₁, *X*₂, *X*₃, ...) correspond to approximate solutions of a family of optimization problems with a common objective function and/or at least one common optimization constraint.

3. The method (200) of claim 1, wherein the potential motion paths (*X*₁, *X*₂, *X*₃, ...) correspond to approximate Pareto-optimal solutions of a common multi-objective optimization problem.

4. The method (200) of any of the preceding claims, further comprising executing (250) the preferred at least one potential motion path.

5. The method (200) of any of the preceding claims, further comprising using the preferred at least one potential motion path as a basis for continued path planning.

6. A method (300) of facilitating responsive robot path planning, the method implemented in an operator interface (130) associated with an operator (190) who shares a workspace (Ω) with a robot manipulator (110) and who wears or carries the operator interface, the method comprising:
obtaining (310), from a robot controller (120) controlling the robot manipulator, a plurality of potential motion paths (*X*₁, *X*₂*, X*₃, ...) of the robot manipulator (110);
visualizing (320) the potential motion paths together at the same time;
sensing (330) operator behavior during the visualization, wherein the operator behavior includes a physical space (*A*₁₉₀) occupied by the operator during the visualization; and
making (340) the operator behavior available to the robot controller.

7. The method (300) of any of the preceding claims, wherein the potential motion paths (*X*₁, *X*₂*, X*₃, ...) are visualized in an augmented-reality, AR, environment.

8. The method (300) of claim 7, wherein the AR environment includes a virtual silhouette (700) superimposed on the robot manipulator (110), wherein a color, pattern or dimension (*d*) of the virtual silhouette is related to the mass, moment of inertia and/or transferable energy of the robot manipulator (110).

9. The method (300) of claim 7 or 8, wherein the AR environment includes an occupancy area (*A*₁) of a potential motion path (*X*₁).

10. The method (200, 300) of any of the preceding claims, wherein the operator behavior further includes a motion path selection by the operator (190).

11. The method (200, 300) of any of the preceding claims, wherein the operator behavior further includes a motion constraint (Ωₒ) input by the operator (190).

12. The method (200, 300) of any of the preceding claims, wherein the operator behavior further includes a physical space (*A*₁₉₀) to be occupied by the operator (190).

13. The method (200, 300) of any of the preceding claims, wherein the robot manipulator (110) belongs to a collaborative robot.

14. A robot controller (120) configured to control a robot manipulator (110), comprising:
a wireless interface (121) configured for communication with an operator interface (130) associated with an operator (190) who shares a workspace (Ω) with the robot manipulator and who wears or carries the operator interface; and
processing circuitry (122) configured to perform path planning and to execute the method (200) of any of claims 1 to 5 and 10 to 13.

15. An operator interface (130) associated with an operator (190) who shares a workspace (Ω) with a robot manipulator (110), the operator interface being adapted to be worn or carried by the operator and comprising:
a wireless interface (131) configured for communication with a robot controller (120) controlling the robot manipulator;
an arrangement (132) for visualizing motion paths (*X*₁, *X*₂*, X*₃, ...) of the robot manipulator;
one or more sensors (133) for sensing operator behavior, wherein the operator behavior includes a physical space (*A*₁₉₀) occupied by the operator during the visualization; and
processing circuitry (134) configured to execute the method (300) of any of claims 6 to 13.

## Patentansprüche

1. Verfahren (200) zur responsiven Roboterpfadplanung, wobei das Verfahren in einer Robotersteuerung (120) implementiert ist und Folgendes umfasst:
Bereitstellen (210) mehrerer potenzieller Bewegungspfade (X₁, X₂, X₃, ...) eines Robotermanipulators (110), der durch die Robotersteuerung gesteuert wird;
Veranlassen (220), dass eine Bedienerschnittstelle (130) die potenziellen Bewegungspfade gleichzeitig zusammen visualisiert, wobei die Bedienerschnittstelle mit einem Bediener (190) assoziiert ist, der einen Arbeitsbereich (Ω) mit dem Robotermanipulator teilt und der die Bedienerschnittstelle trägt oder bei sich führt;
Erhalten (230) eines Bedienerverhaltens während der Visualisierung, wobei das Bedienerverhalten einen physischen Raum (A₁₉₀) beinhaltet, der von dem Bediener während der Visualisierung eingenommen wird; und
Auswählen (240), aus den potenziellen Bewegungspfaden und basierend auf dem physischen Raum, der von dem Bediener eingenommen wird, mindestens eines bevorzugten Bewegungspfades,
wobei die potenziellen Bewegungspfade funktionell äquivalent sind in Bezug auf mindestens eine Anfangs- oder Endbedingung und/oder eine Transportaufgabe.

2. Verfahren (200) nach Anspruch 1, wobei die potenziellen Bewegungspfade (X₁, X₂, X₃, ...) ungefähren Lösungen einer Familie von Optimierungsproblemen mit einer gemeinsamen Zielfunktion und/oder mindestens einer gemeinsamen Optimierungseinschränkung entsprechen.

3. Verfahren (200) nach Anspruch 1, wobei die potenziellen Bewegungspfade (X₁, X₂, X₃, ...) ungefähren Pareto-optimalen Lösungen eines gemeinsamen Mehrzieloptimierungsproblems entsprechen.

4. Verfahren (200) nach einem der vorhergehenden Ansprüche, ferner umfassend Ausführen (250) des bevorzugten mindestens einen potenziellen Bewegungspfades.

5. Verfahren (200) nach einem der vorhergehenden Ansprüche, ferner umfassend Verwenden des bevorzugten mindestens einen potenziellen Bewegungspfades als Grundlage für eine kontinuierliche Pfadplanung.

6. Verfahren (300) zum Ermöglichen einer responsiven Roboterpfadplanung, wobei das Verfahren in einer Bedienerschnittstelle (130) implementiert ist, die mit einem Bediener (190) assoziiert ist, der einen Arbeitsbereich (Ω) mit einem Robotermanipulator (110) teilt und der die Bedienerschnittstelle trägt oder bei sich führt, wobei das Verfahren Folgendes umfasst:
Erhalten (310), von einer Robotersteuerung (120), die den Robotermanipulator steuert, mehrerer potenzieller Bewegungspfade (X₁, X₂, X₃, ...) des Robotermanipulators (110);
Visualisieren (320) der potenziellen Bewegungspfade gleichzeitig zusammen;
Erfassen (330) eines Bedienerverhaltens während der Visualisierung, wobei das Bedienerverhalten einen physischen Raum (A₁₉₀) beinhaltet, der von dem Bediener während der Visualisierung eingenommen wird; und
Verfügbarmachen (340) des Bedienerverhaltens für die Robotersteuerung.

7. Verfahren (300) nach einem der vorhergehenden Ansprüche, wobei die potenziellen Bewegungspfade (X_{1,} X_{2,} X_{3, ...}) in einer Augmented-Reality- bzw. AR-Umgebung visualisiert werden.

8. Verfahren (300) nach Anspruch 7, wobei die AR-Umgebung eine virtuelle Silhouette (700) beinhaltet, die dem Robotermanipulator (110) überlagert ist, wobei eine Farbe, ein Muster oder eine Abmessung (d) der virtuellen Silhouette mit der Masse, dem Trägheitsmoment und/oder der übertragbaren Energie des Robotermanipulators (110) in Beziehung steht.

9. Verfahren (300) nach Anspruch 7 oder 8, wobei die AR-Umgebung einen Belegungsbereich (A₁) eines potenziellen Bewegungspfades (X₁) beinhaltet.

10. Verfahren (200, 300) nach einem der vorhergehenden Ansprüche, wobei das Bedienerverhalten ferner eine Bewegungspfadauswahl durch den Bediener (190) beinhaltet.

11. Verfahren (200, 300) nach einem der vorhergehenden Ansprüche, wobei das Bedienerverhalten ferner eine Bewegungseinschränkung (Ω_{ο}) beinhaltet, die durch den Bediener (190) eingegeben wird.

12. Verfahren (200, 300) nach einem der vorhergehenden Ansprüche, wobei das Bedienerverhalten ferner einen physischen Raum (A₁₉₀) beinhaltet, der von dem Bediener (190) eingenommen werden soll.

13. Verfahren (200, 300) nach einem der vorhergehenden Ansprüche, wobei der Robotermanipulator (110) zu einem kollaborativen Roboter gehört.

14. Robotersteuerung (120), die dazu ausgelegt ist, einen Robotermanipulator (110) zu steuern, und Folgendes umfasst:
eine drahtlose Schnittstelle (121), die zur Kommunikation mit einer Bedienerschnittstelle (130) ausgelegt ist, die mit einem Bediener (190) assoziiert ist, der einen Arbeitsbereich (Ω) mit dem Robotermanipulator teilt und der die Bedienerschnittstelle trägt oder bei sich führt;
und
eine Verarbeitungsschaltungsanordnung (122), die dazu ausgelegt ist, eine Pfadplanung durchzuführen und das Verfahren (200) nach einem der Ansprüche 1 bis 5 und 10 bis 13 auszuführen.

15. Bedienerschnittstelle (130), die mit einem Bediener (190) assoziiert ist, der einen Arbeitsbereich (Ω) mit einem Robotermanipulator (110) teilt, wobei die Bedienerschnittstelle dazu ausgelegt ist, von dem Bediener getragen oder bei sich geführt zu werden, und Folgendes umfasst:
eine drahtlose Schnittstelle (131), die zur Kommunikation mit einer Robotersteuerung (120) ausgelegt ist, die den Robotermanipulator steuert;
eine Anordnung (132) zur Visualisierung von Bewegungspfaden (X₁, X₂, X₃, ...) des Robotermanipulators;
einen oder mehrere Sensoren (133) zum Erfassen von Bedienerverhalten, wobei das Bedienerverhalten einen physischen Raum (A₁₉₀) beinhaltet, der von dem Bediener während der Visualisierung eingenommen wird; und
eine Verarbeitungsschaltungsanordnung (134), die dazu ausgelegt ist, das Verfahren (300) nach einem der Ansprüche 6 bis 13 auszuführen.

## Revendications

1. Procédé (200) de planification de trajet de robot réactive, le procédé étant mis en œuvre dans une unité de commande de robot (120) et comprenant les faits suivants :
fournir (210) une pluralité de trajets de mouvement potentiels (X₁, X₂, X₃, ...) d'un manipulateur de robot (110) commandé par l'unité de commande de robot ;
amener (220) une interface opérateur (130) à visualiser les trajets de mouvement potentiels ensemble en même temps, dans lequel l'interface opérateur est associée à un opérateur (190) qui partage un espace de travail (Ω) avec le manipulateur de robot et qui porte ou transporte l'interface opérateur ;
obtenir (230) un comportement opérateur durant la visualisation, dans lequel le comportement opérateur inclut un espace physique (A₁₉₀) occupé par l'opérateur durant la visualisation ; et
sélectionner (240), parmi les trajets de mouvement potentiels et sur la base de l'espace physique occupé par l'opérateur, au moins un trajet de mouvement préféré,
dans lequel les trajets de mouvement potentiels sont fonctionnellement équivalents en ce qui concerne au moins une condition initiale ou finale et/ou une tâche de transport.

2. Procédé (200) de la revendication 1, dans lequel les trajets de mouvement potentiels (X₁, X₂, X₃, ...) correspondent à des solutions approximatives d'une famille de problèmes d'optimisation avec une fonction d'objectif commune et/ou au moins une contrainte d'optimisation commune.

3. Procédé (200) de la revendication 1, dans lequel les trajets de mouvement potentiels (X₁, X₂, X₃, ...) correspondent à des solutions optimales de Paréto approximatives d'un problème d'optimisation multi-objectif commune.

4. Procédé (200) de quelconques des revendications précédentes, comprenant en outre le fait d'exécuter (250) l'au moins un trajet de mouvement potentiel préféré.

5. Procédé (200) de quelconques des revendications précédentes, comprenant en outre le fait d'utiliser l'au moins un trajet de mouvement potentiel préféré en tant que base pour planification de trajet prolongée.

6. Procédé (300) de facilitation de planification de trajet de robot réactive, le procédé étant mis en œuvre dans une interface opérateur (130) associée à un opérateur (190) qui partage un espace de travail (Ω) avec un manipulateur de robot (110) et qui porte ou transporte l'interface opérateur, le procédé comprenant les faits suivants :
obtenir (310), en provenance d'une unité de commande de robot (120) commandant le manipulateur de robot, une pluralité de trajets de mouvement potentiels (X₁, X₂, X₃, ...) du manipulateur de robot (110) ;
visualiser (320) les trajets de mouvement potentiels ensemble en même temps ;
détecter (330) un comportement opérateur durant la visualisation, dans lequel le comportement opérateur inclut un espace physique (A190) occupé par l'opérateur durant la visualisation ; et
mettre (340) le comportement opérateur à la disponibilité de l'unité de commande de robot.

7. Procédé (300) de quelconques des revendications précédentes, dans lequel les trajets de mouvement potentiels (X₁, X₂, X₃, ...) sont visualisés dans un environnement de réalité augmentée, Augmented Reality, AR.

8. Procédé (300) de la revendication 7, dans lequel l'environnement AR inclut une silhouette virtuelle (700) superposée sur le manipulateur de robot (110), dans lequel une couleur, un motif, ou une dimension (d) de la silhouette virtuelle est reliée à la masse, au moment d'inertie, et/ou à une énergie transférable du manipulateur de robot (110).

9. Procédé (300) de la revendication 7 ou 8, dans lequel l'environnement AR inclut une zone d'occupation (A₁) d'un trajet de mouvement potentiel (X₁).

10. Procédé (200, 300) de quelconques des revendications précédentes, dans lequel le comportement opérateur inclut en outre une sélection de trajet de mouvement par l'opérateur (190).

11. Procédé (200, 300) de quelconques des revendications précédentes, dans lequel le comportement opérateur inclut en outre une contrainte de mouvement (Ω_{ο}) entrée par l'opérateur (190).

12. Procédé (200, 300) de quelconques des revendications précédentes, dans lequel le comportement opérateur inclut en outre un espace physique (A₁₉₀) devant être occupé par l'opérateur (190).

13. Procédé (200, 300) de quelconques des revendications précédentes, dans lequel le manipulateur de robot (110) appartient à un robot de travail collaboratif.

14. Unité de commande de robot (120) configurée pour commander un manipulateur de robot (110), comprenant :
une interface sans fil (121) configurée pour communication avec une interface opérateur (130) associée à un opérateur (190) qui partage un espace de travail (Ω) avec le manipulateur de robot et qui porte ou transporte l'interface opérateur ; et
une circuiterie de traitement (122) configurée pour réaliser une planification de trajet et pour exécuter le procédé (200) de quelconques des revendications 1 à 5 et 10 à 13.

15. Interface opérateur (130) associée à un opérateur (190) qui partage un espace de travail (Ω) avec un manipulateur de robot (110), l'interface opérateur étant adapté pour être porté ou transporté par l'opérateur et comprenant :
une interface sans fil (131) configurée pour communication avec une unité de commande de robot (120) commandant le manipulateur de robot ;
un agencement (132) pour visualiser des trajets de mouvement (X₁, X₂, X₃, ...) du manipulateur de robot ;
un ou plusieurs capteurs (133) pour détecter un comportement opérateur, dans lequel le comportement opérateur inclut un espace physique (A₁₉₀) occupé par l'opérateur durant la visualisation ; et
une circuiterie de traitement (134) configurée pour exécuter le procédé (300) de quelconques des revendications 6 à 13.
